# EUROPEAN PATENT SPECIFICATION

(11) **EP 0 822 896 B1**
(45) Date of publication and mention of the grant of the patent: **24.10.2001**
(21) Application number: 95922551.7
(22) Date of filing: 19.06.1995
(51) Int. Cl.: B32B 13/00, B28B 1/16, B28B 1/30, C04B 9/02, C04B 9/04, C09J 1/02

(54) **LAMINATED STRUCTURE WITH IMPROVED FIRE RESISTANCE AND PROCEDURE FOR THE MANUFACTURE OF THE STRUCTURE**
MEHRSCHICHTIGE STRUKTUR MIT VERBESSERTER FEUERBESTÄNDIGKEIT UND VERFAHREN ZU DEREN HERSTELLUNG
STRUCTURE STRATIFIEE AYANT UNE RESISTANCE AU FEU AMELIOREE ET SON PROCEDE DE FABRICATION

(30) Priority: 26.04.1995 HR 950255; 09.05.1995 FI 952241
(43) Date of publication of application: 11.02.1998
(73) Proprietor: Atévic, Tomislav, 10294 Pojatno (HR); Voncina, Milan, 10000 Zagreb (HR)
(72) Inventor: ATEVIC, Tomislav, 10294 Pojanto, Croatia (HR)
(74) Representative: Tanskanen, Jarmo Tapio
(86) International application number: FI9500355
(87) International publication number: WO9633866

(56) References cited:
- FR-A- 2 479 182
- GB-A- 2 023 619
- US-A- 3 320 077
- US-A- 4 003 752

## Description

The present invention relates to a structure as defined in the preamble of claim 1. A further object of the invention is a procedure as defined in the preamble of claim 17.

Previously known are e.g. laminated and layered structures, so-called reinforced plastic structures, which are produced by saturating with organic resins such as polyester, epoxide etc. Such structures are not fire resistant but, on the contrary, combustible.

FR 2479182 A concerns a moulded facing for construction element with skin produced from magnesium oxide and chloride binder. Moulded facings for construction elements are produced by casting a two-component hydraulic binder onto the bottom of a mould to form a surface skin, reinforcing the skin with at least one reinforcing layer of mineral, vegetable or organic origin, and heating to 40 - 50 °C to accelerate oxychloride formation by the magnesium oxide and magnesium chloride components of the binder. The facings are non-flammable, having high mechanical strength and contain natural reinforcing materials. The binder may consist of 20 - 30% magnesium chloride, 70 - 80% magnesium oxide and as small an amount of water as is required to obtain a mouldable mixture. The binder may contain 25 - 30% filler such as sand, laterite, calcium carbonate or marble powder. The binder layer is preferably reinforced by fibres, especially a glass fibre mat comprising 2 - 5% of the layer.

GB 2023619 A concerns Sorel cement composition containing added ethyl silicate to provide stability against attack by water. Sorel cement composition comprises MgCl₂, MgO water and ethyl silicate, the last is sufficient quantity to render the mixture stable to water i.e. 0.5 - 2 wt.%. The cement may be mixed with glass fibres in amount 1 -- 10 wt.%. The cement is hardened in an atmosphere which is relatively saturated. The addition of ethyl silicate overcomes the sensitivity to water.

The object of the present invention is to produce a completely new type of structure which can be used in a manner and in applications corresponding to organic resins, e.g. in reinforced structures with a fibrous framework, but which new structure has a fire resistance of an order totally different from reinforced plastic structures and is also cheap to manufacture, strong, durable and light.

A specific object of the invention is to produce a fire resistant coat, a hard or an elastic wall, a laminated board and/or laminated structure with or without thermal and/or sound insulation, which can be used e.g. in mechanical engineering, building, boat, vehicle, aeroplane and shipbuilding industries.

The structure of the invention is characterized by what is presented in claim 1. The procedure of the invention is characterized by what is presented in claim 17.

According to the invention, the structure comprises a layer of inorganic silicate-oxychloridic cement which is composed of water (H₂O), magnesium sulphate (MgSO₄), magnesium oxide (MgO) and sodium silicate (waterglass). Instead of magnesium sulphate, it is possible to use magnesium chloride (MgCl₂), in which case the resulting material is silicate-oxychloridic cement.

In addition to its most important property, fire resistance, such cement is light, hard, strong and water resistant. When wet, it adheres well to any other structure, so it can be used as a coating and in different laminated structures to join the laminae together without the need to use any other adhesive materials.

It has been found in fire tests that when the material is heated on a flame to high temperatures, e.g. to a temperature of 900 °C, an endothermic reaction and a cooling of the thermal wave occur in the material, with the effect that the temperature in the material cannot rise to a critical level. Furthermore, the cement does not develop any detrimental gases. Though it is fire resistant, the material contains no asbestos, unlike certain previously known fire resistant structures. The presence of sodium silicate in the material protects it against dissolution in water and enhances its endothermic feature in the combustion process. Moreover, the material has a very low coefficient of thermal expansion, which means that it preserves its shape and is not deformed in fire. As the structure is a reinforced laminate, it can be manufactured in open or closed tools under minimum pressure because it adapts to the given shape, allowing large boards to be manufactured in one piece. As compared with a corresponding reinforced plastic structure, the structure of the invention weighs only half as much. For instance, conventional reinforced plastic laminate of a thickness of 6 mm weighs 11 - 12 kg/m², whereas corresponding reinforced laminate produced according to the invention weighs about 8 - 9 kg/m².

In an embodiment of the structure, the cement contains about 10 - 20 w-% of water (H₂O), about 40 - 60 w-% of magnesium oxide (MgO) and ≤ 10 w-% of sodium silicate. In this case the cement contains about 30 - 40 w-% of magnesium sulphate (MgSO₄) or alternatively magnesium chloride (MgCl₂).

In an embodiment of the structure, the layer is a coating formed from said silicate-oxychloridic cement and/or slicate-oxysulphatic cement, which is applied directly onto the surface of the base material to be protected. The coating can be applied by spraying e.g. onto the metal surface of the bulkhead of a ship.

In an embodiment of the structure, the structure consists of a fibre-reinforced laminate comprising a fibrous reinforcement which is impregnated with a layer of bonding agent consisting of silicate-oxychloridic cement and/or silicate-oxysulphatic cement as mentioned above. In such laminates, the fibrous reinforcement used may consist of a non-alkaline glass fibre mat, felt and/or textile placed in one or more layers on top of each other. The laminate can be provided with a top layer consisting of organic resin. The fibrous reinforcement is preferably at least partially bonded together with the organic resin of the top layer and, on the other hand, preferably to a depth about half its thickness, with the layer of inorganic bonding agent, so that the organic and inorganic layers are joined together.

In an embodiment of the structure, the organic resin of the top layer is a polyester gelcoat rendered hard and more fire resistant by means of aluminium hydroxide (Al(OH)₃). Polyester gelcoat is used as in reinforced plastic structures as a top layer to produce a smooth and glossy surface with an esthetic appearance, e.g. in the form of a film of a thickness of about 1 mm.

In an embodiment of the structure, the structure comprises a thin metal sheet, such as a metal foil, which is bonded by means of a bonding cement onto the surface of the structure to form a coat on it. The metal foil adheres well to the surface of a wet cement layer. The coat used may be any suitable metal film which gives the desired esthetic appearance e.g. to a wall element.

In an embodiment of the structure, the structure comprises a layer of insulating material consisting of foamed resin and bonded together with the structure by a cement as mentioned above. The insulating layer of foamed resin may consist e.g. of foamed phenolic resin, polyurethane or styrol. Foamed organic resin as such has a low fire resistance, but when provided with a cement layer as mentioned above, its fire resistance is substantially improved.

In an embodiment of the structure, the structure comprises a layer of fibrous insulating material consisting of inorganic fibre and bonded together with the structure by said cement. The layer of insulating material may consist of fibre glass, mineral wool, rock wool. Preferably the layer of insulating material consists of so-called laminated wool, in which the fibre direction is essentially the same as the direction of the board. An uninflammable laminate made from a fibre glass fabric impregnated with a bonding cement together with a layer of insulating material attached to it with a bonding agent forms an uninflammable sound- and heat-insulating rigid laminated board which can be used as a planar or curved wall element in a wide range of applications.

In an embodiment of the structure, the structure is a three-layer structure which has a platelike middle layer of insulating material and two laminates reinforced with a fibrous reinforcement and impregnated with said bonding cement, the two laminates being laminated onto opposite sides of the middle layer.

Correspondingly, in the procedure of the invention for the manufacture of a laminated structure with improved fire resistance, a layer of inorganic silicate-oxychloridic cement and/or inorganic silicate-oxysulphatic cement is formed in the structure. The hardening of the cement can be accelerated by subjecting the structure to a heightened temperature of the order of about 40 - 80 C°. The laminates and laminated structures are manufactured layer by layer in a manner similar to the manufacture of reinforced plastics, i.e. on the wet-on-wet principle, which means that the manufacture can be implemented using a continuous industrial production process.

A special advantage of the invention is that it makes it possible to produce structures resembling reinforced plastic structures but which structures, e.g. wall, shell and laminated structures, are incombustible in accordance with the IMO Resolution norm and DIN norm 4102. These structures can be used e.g. in buildings and ships e.g. as wall, ceiling and panel elements etc. The structure of the invention can be used to form e.g. an entire cabin module of a so-called sanitary cubicle type, complete with WC and shower equipment. The norms applying to ships stipulate that the structures should be uninflammable in accordance with the IMO-Res. B15 norm, in other words, that they should withstand a temperature of 900 C° for 15 minutes without catching fire. Reinforced plastic structures do not meet this norm, which is why it has not been possible to use prefabricated reinforced plastic modules in ships, whereas according to the invention the structures can be made such that they even meet the demands of the IMO-Res. B30 norm, which is more stringent than the B15 norm, in other words, the structures endure fire at 900 C° for 30 minutes and even longer.

The structure of the invention, containing a layer of hardened silicate-oxychloridic or silicate-oxysulphatic cement, thus solves the problem of manufacturing fire- and waterproof impregnated structural materials subject to physical influences. It is sufficiently hard and light, and together with an uninflammable insulating material (heat or sound insulation) it can be used in the form of planar or curved boards, as laminated walls usable in containers, cabins, kiosks, doors, partitions, etc. When attached directly to the panel or steel structure of a ship's bulkhead, the laminated structures provide an excellent insulation and fireproofing. The structures of the invention are also usable in cooling systems.

Other features of the procedure are presented in the claims and in the following detailed description of the invention.

In the following, the invention is described in detail by referring to the attached drawings, in which
Fig. 1 presents in diagrammatic form a cross-section of a first embodiment of the structure of the invention, the structure being a coating,
Fig. 2 presents in diagrammatic form a cross-section of another embodiment of the structure of the invention, in which the structure is a reinforced laminated board provided with a decorative top layer,
Fig. 3 presents in diagrammatic form a cross-section of a third embodiment of the structure of the invention, in which the structure is a reinforced laminated board provided with a decorative metal foil coating,
Fig. 4 presents in diagrammatic form a cross-section of a fourth embodiment of the structure of the invention, in which the structure is a panel of laminated structure with a layer of insulating material,
Fig. 5 presents a fifth embodiment of the structure of the invention, in which the structure is a panel of laminated structure with a layer of insulating material,
Fig. 6 illustrates the change in the temperature in an oven used to apply a thermal load to a laminated panel tested in test example 3, as a function of time during the test,
Fig. 7 illustrates the change in the temperatures measured at measuring points on the external surface of a laminated panel as tested in test example 3, as a function of time during the test,
Fig. 8 illustrates the change in the temperature in an oven used to apply a thermal load to a door panel tested in test example 4, as a function of time during the test, and
Fig. 9 illustrates the change in the temperatures measured at measuring points on the external surface of the door panel tested in test example 4, as a function of time during the test.

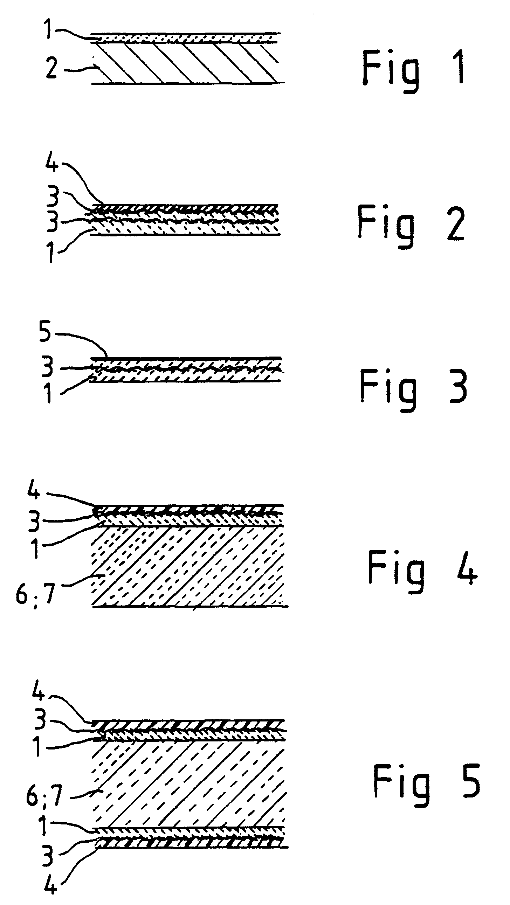

Fig. 1 shows a fire resistant protective structure implemented in the form of a coat 1 applied in a thin layer onto a base material e.g. by spraying and hardened on the surface of the base material 2. The base material 2 may consist of any object to be protected, such as the body or bulkhead of a ship, a wall of a building. The fire resisting property is achieved by the coating layer, which may consist of inorganic silicate-oxychloridic cement and/or inorganic silicate-oxysulphatic cement. The silicate-oxysulphatic cement is composed of water (H₂O), magnesium sulphate (MgSO₄), magnesium chloride (MgCl₂), magnesium oxide (MgO) and sodium silicate (waterglass).

The consistency of the cement is preferably such that it contains 10 - 20 w-% of water, about 40 - 60 w-% of magnesium oxide, and at most 10 w-% of sodium silicate. In addition to these, the mixture also contains about 30 - 40 w-% of magnesium sulphate or alternatively magnesium chloride, depending on whether it is to form silicate-oxychloridic cement or silicate-oxysulphatic cement.

Fig. 2 shows a rigid laminated board formed by reinforcing the bonding agent 1, which consists of silicate-oxychloridic cement or silicate-oxysulphatic cement corresponding to the coat in the example in fig. 1, with fibrous reinforcements 3. These consist of non-alkaline, in this example two fibre glass mats. The fibre glass mat 3 is sunk in the cement, i.e. impregnated with it. On the surface of the board there is a top layer 4 consisting of organic polyester resin. This layer is preferably formed by using a polyester gelcoat modified with aluminium hydroxide (Al(OH)₃). The topmost fibre glass mat 3 is partially, i.e. through one half of its thickness, bonded together with the organic resin of the top layer 4 and, on the other hand, it is also bonded together with the layer of inorganic bonding agent 1 through about one half of its thickness, thus joining the organic and inorganic layers to each other so that they constitute a continuous structure. The structure is formed on the wet-on-wet principle.

Fig. 3 shows a reinforced laminated board in which a fibre glass mat 3 is sunk in bonding cement 1 as described under fig. 1. A metal foil 5 is laid on top of the bonding agent layer 1 to give the structure an esthetically pleasing appearance. A metal foil 5 or any kind of sheet adheres well to the bonding cement 1 of the invention without the use of any other coupling agent.

Fig. 4 shows a laminated sandwich board comprising a layer of insulating material 6; 7 bonded together with a rigid sheetlike surface layer by means of bonding cement 1 e.g. as described in connection with fig. 2. The insulating layer may be an insulation layer 6 consisting of foamed resin or a fibrous insulation layer 7 consisting of inorganic fibre and it is bonded together with the surface sheet structure by the cement 1. The insulation layer may consist e.g. of phenolic resin, polyurethane or styrol. The fireproof fibrous insulation layer 7 again may consist of fibre glass, mineral wool, rock wool or the like. Preferably this insulation layer 7 contains so-called laminated wool, in which the fibre direction is essentially the same as the direction of the board.

Fig. 5 shows a three-layer structure comprising a platelike middle layer 6; 7 of insulating material and two laminates reinforced with a fibrous reinforcement 3 and impregnated with said bonding cement 1, laminated onto opposite sides of the middle layer so that the middle layer 6, 7 is contained between the two laminates 3. The laminates 3 may be reinforced with a non-alkaline glass framework and they can be provided with a gel-coat top layer 4 or a metal foil 5 as described in connection with the applications of fig. 2 or 3. The layer of insulating material 6; 7 may consist of a fibrous or foamed insulating material as in the previous example. Such a laminated structure provides excellent insulation against fire, moisture, heat and noise.

In each of the examples described, the fire resistance of the structure can be adjusted simply by varying the thickness of the cement layer, e.g. by adding more cement layers.

### EXAMPLE

To produce a laminated board having an area or 1 m² and a thickness of 6 mm and either a flat or a curved shape (e.g. prefabricated cabin with WC and shower) and covered with a protecting top layer made of polyester, the following materials are needed:
(a) 3 non-alkaline glass mats, each weighing 450 g/m² and measuring 1000x1000 mm.
(b) 2 non-alkaline fibre glass felts 40-60 g/m², 1000x-1000 mm
(c) water, 1 kg
(d) magnesium chloride (MgCl₂) 47 %, 2.5 kg; or
(e) magnesium sulphate (MgSO₄) 49 %, 2.5 kg
(f) magnesium oxide - alkali (MgO) 5 kg
(g) sodium silicate (waterglass) ≈45 Bö, 0.5 kg
(h) modified polyester (aluminium hydroxide 0.3 kg + polyester Chromos S020 0.8 kg), contact and accelerator.

The product is manufactured as follows:
(a) magnesium chloride is mixed in cold water, or magnesium sulphate is mixed in warm water (≈60 C°),
(b) saline solution prepared in advance is poured gradually into a container together with sodium silicate, stirring, until it has dissolved completely, and then both liquids are poured into a mixer (this is the contact liquid),
(c) the magnesium oxide is poured into the contact liquid while stirring slowly, stirring is continued until the mass of bonding agent becomes completely compact,
(d) the surface of a mold beforehand covered with a layer of release wax is first covered with modified polyester by means of a roller, whereupon a non-alkaline glass felt is pressed onto the wet surface,
(e) a thin layer of modified polyester is sprayed onto the glass fibre mat and the mat is pressed onto the wet side of the mold; after a gel has been formed (this takes about 15 min), the bonding cement is applied using a roller,
(f) the glass fibre mat layers are impregnated with the bonding cement. Using a polyethylene film placed on the surface, the air is then forced out from the top surface and the surface is smoothed. After the polyethylene film has been removed, the wet panels are pressed against the wet surface of the mold, the air is forced out and the required shape is achieved. The film may be left in place until the product has been hardened, whereupon it can be removed.
(g) if the product is manufactured using silicate oxychloride, complete hardening takes 12 - 14 hours at a temperature of 18 - 30 C°. A product containing silicate oxysulphate can be treated in a hot press or chamber at 60 - 80 C°, which will accelerate the hardening process to 10 - 15 min. In a heat chamber (approx. 40 - 50 C°) the hardening would take somewhat longer (2 - 6 hours). After the laminate has been removed from the mold, it is ready for processing (by cutting, grinding or polishing), although the product will only reach its full degree of hardness in 20 days. A 6 mm thick Vazomat laminate weighs about 8 - 9 kg/m².

If a laminated-board panel were to be made from sheets both sides of which are provided with reinforced laminates formed with a bonding cement and which have a 20 mm thick heat insulation of 50 - 80 kg/m³ mineral wool or fibre glass, then instead of a 450 g/m² non-alkaline fibre glass mat, four 300 g/m² mat sheets would be used and the procedure would be repeated for each side of the product. A laminated panel of a thickness of 25 mm would have a mass of about 10 kg/m² and it would reach a fire resistance according to the DIN 4102 and IMO Resolution B30 and F300 standards, which require an endurance of over 30 minutes.

Below are brief descriptions of fire resistance tests performed on structures produced according to the invention.

### TEST EXAMPLE 1

A VAZOMAT laminated board as provided by the invention was subjected to a combustibility test according to the IMO Resolution norm A.472(XII) (Test report DN 5/530-649/94-A). The material was a 10 mm thick sheet made of non-alkaline fibre glass mat, inorganic bonding agent based on oxysulphatic cement and about 10% aluminate bonding agent. According to the test report, the material was found to be non-combustible in accordance with IMO Res. A.472.

### TEST EXAMPLE 2

An IRSOPAN laminate product as provided by the invention was subjected to a surface spread of flame test according to norm BS 476: Part 7: 1971. (Test report number 5/530-649/94-B ZMRK-Institute for Research and Quality Control; Ljubljana, Slovenia). The product under testing was a panel consisting of polyester resin, fibre glass mat and bonding agent. The composition of the panel was as follows:
- polyester gelcoat Chromoplast S-202 Vazomat 0.5 kg/m²
- non-alkaline glass fabric 60 g/m²
- polyester bonding agent Chromoplast S-202 Vazomat 0.5 kg/m²
- two layers of non-alkaline fibre glass mat 450 kg/m²
- oxysulphatic bonding agent Vazomat 1 kg/m²
- aluminate bonding agent Vazomat 1 kg/m².

The limit values for the best class according to the norm, class 1, are: flame propagation 165 mm in 1.5 min and final propagation in 10 min.

The test results for six samples were: flame propagation 25 - 40 min in 1.5 min and final propagation 25 - 40 mm in 10 min.

Thus, the test yielded a result according to which the product meets the limit values of the best "Class 1" according to norm BS 476:Part 7: 1971.

### TEST EXAMPLE 3

A laminated board "IRSOPAN Mineral Sandwich for "B15" Class Bulkhead" was subjected to a fire resistance test according to norm IMO Res. A 754(18) for class "B" bulkhead classification. (Test report no. 5/530-649/94-C, ZMRK-Institute for Research and Quality Control; Ljubljana, Slovenia).

The test specimen consisted of three panels of which two had a width of 950 mm and one 465 mm. The thickness of the panel was 50 mm. The panels were made of Novoterm TIP/L glass wool with polyester gelcoat, fibre glass mat, polyester resin, oxysulphatic bonding agent and aluminate bonding agent. In detail, the materials were as follows:
Insulation:
   manufacturer: Novoterm, Novo Mesto, Slovenia
   commercial designation: NOVOTERM TIP/L glass fibre, containing a small amount of organic bonding agent
   reaction to fire: non-combustible according to norm IMO Res. A.472 (XII)
   nominal thickness: 43 mm
   nominal density: 58 kg/m³; measured 55.4 kg/m³
   specific heat: 840 J/kgK
   thermal conductivity: 0.035 W/mK
   bonding agent content: 6.83 w-%
Reinforcing material
   manufacturer: IRS GmbH, Mannheim, Germany
   commercial designation: VAZOMAT
   reaction to fire: non-combustible according to norm IMO Res. A.472 (XII)
      (test report no. 5/530-649/94)
Surface material
   manufacturer: IRS GmbH, Mannheim, Germany
   commercial designation: IRSOPAN
   reaction to fire: low spread of flame - Class 1 according to spread of flame test B.S 476, Part 7 (Test report no. 5/530-649/94-B).

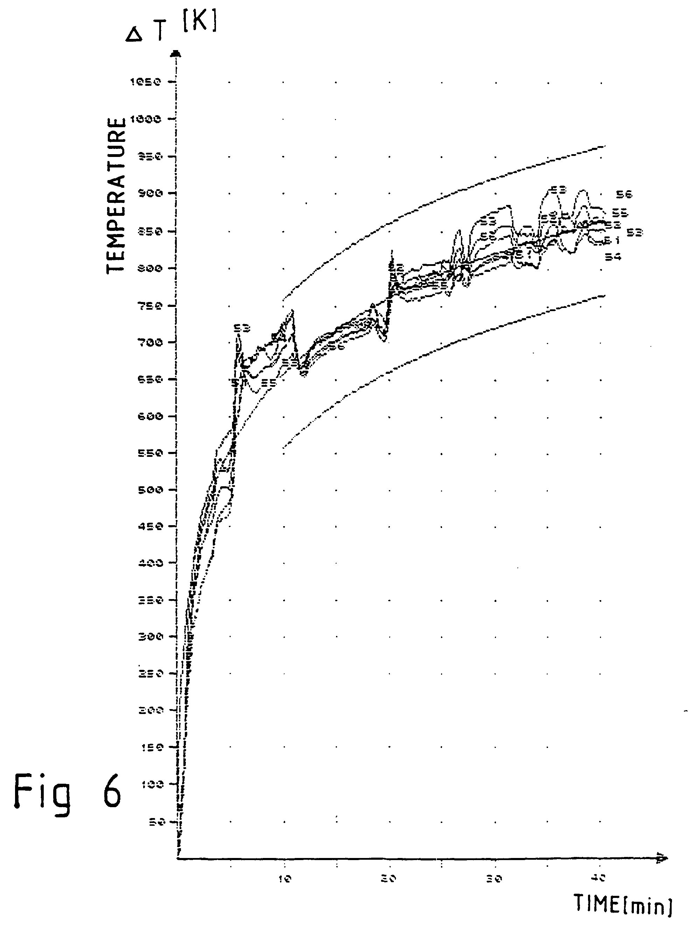

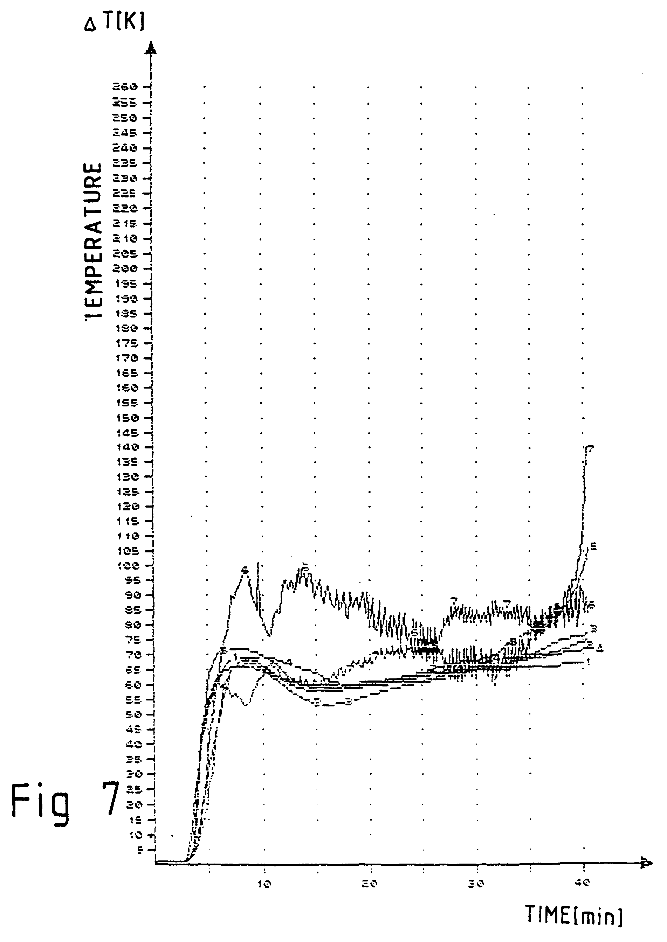

The test was performed according to norm IMO Res. A.754 (18). The panel specimens for the test were placed in an upright position in an oil-heated oven so that they formed one wall of the oven interior, the heat being thus applied to one side of the panel. The temperature was measured at seven measuring points on the opposite side of the panel and the temperature change was recorded as a function of time. Corresponding measurements were taken of the temperature inside the oven. The total duration of the test was 41 min. In Fig. 6 and 7, the temperature is shown in Kelvin degrees on the vertical axis and the time in minutes on the horizontal axis. Fig. 6 shows the development of the oven temperature during the test, and, correspondingly, Fig. 7 depicts simultaneous development of the temperature at different measuring points on the outer surface of the panel during the test. Fig. 7 shows clearly that a cooling effect takes place in the structure of the invention, keeping the temperature at a steady low level although the temperature in the oven rises all the time.

It was established in the test that after 15 min from the start of the test, the average temperature rise on the outer surface of the test specimen was 59 °K. After 30 min, the average temperature rise on the outer surface of the test specimen was 66 °K, while the maximum increase was 85 °K at one point. The test showed that the specimen remained largely undamaged. The amount of distortion of the specimen away form the fire at 30 min was about 34 mm. In accordance with the test, the specimen was classified as "Class B-30 bulkhead".

### TEST EXAMPLE 4

A door assembly according to the invention, "IRSOPAN Door Class B15" was subjected to a fire resistance test according to norm IMO Res. A.754 (18) for class "B" door classification. (Test report no. 5/530-649/94-D, ZMRK-Institute for Research and Quality Control; Ljubljana, Slovenia).

The door assembly, which measured 776x1976 mm, was fitted in the middle of a previously tested bulkhead "B-15". The door panel was made of rock wool sheet coated with polyester gelcoat, fibre glass mat, polyester resin, oxysulphatic bonding agent and aluminate bonding agent. The test was performed using an oven as in the preceding examples.
The sample material consisted of the following:
Insulation:
   manufacturer: Termica, Novi Marof, Croatia
   commercial designation: TERVOL BSI 15 rock wool, containing a small amount of organic bonding agent
   reaction of fire: non-combustible according to norm IMO Res. A.472 (XII)
   nominal thickness: 33 mm
   nominal density: 150 kg/m³; measured 159.9 kg/m³
   specific heat: 840 J/kgK
   thermal conductivity: 0.04 W/mK
   measured bonding agent content: 1.27 w-%
Reinforcing material
   manufacturer: IRS GmbH, Mannheim, Germany
   commercial designation: VAZOMAT
   reaction to fire: non-combustible according to norm IMO Res. A.472 (XII)
Surface material
   manufacturer: IRS GmbH, Mannheim, Germany
   commercial designation: IRSOPAN
   reaction to fire: Class 1 according to flame propagation test B.S 476, Part 7 (Test report no. 5/530-649/94-B).

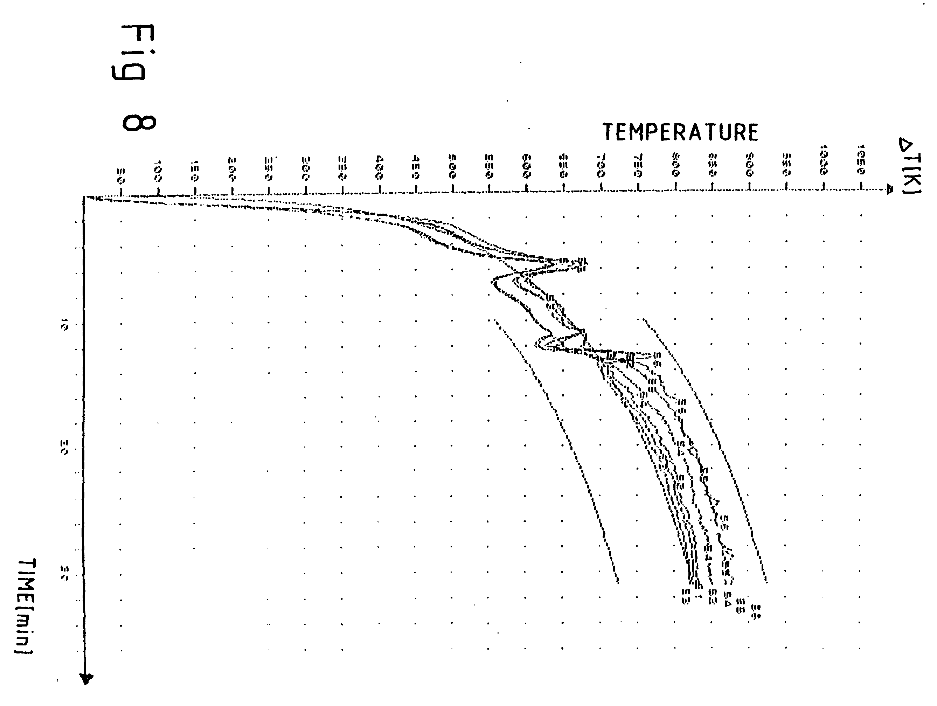

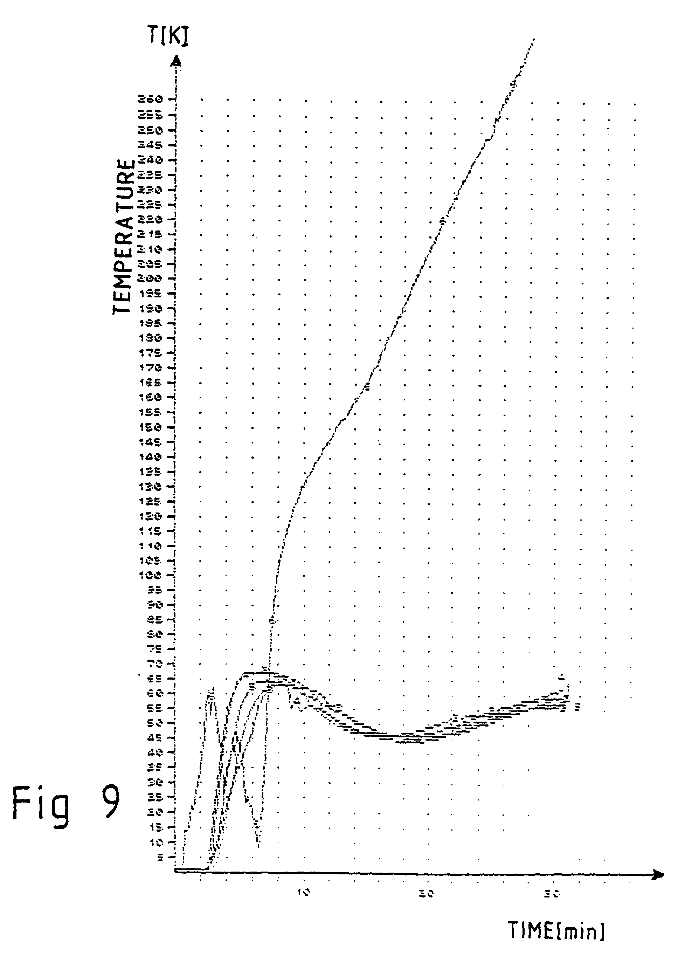

The test was performed according to norm IMO Res. A.754 (18). The total duration of the test was 33 min. In Fig. 8 and 9, the temperature is shown in Kelvin degrees on the vertical axis and the time in minutes on the horizontal axis. Fig. 8 shows the development of the oven temperature during the test, and, correspondingly, Fig. 9 depicts simultaneous development of the temperature at different measuring points on the outer surface of the door panel during the test. Fig. 9 shows clearly that a cooling effect takes place in the structure of the invention, keeping the temperature at a steady low level although the temperature in the oven rises all the time.

It was established in the test that after 15 min from the start of the test, the average temperature rise on the outer surface of the test specimen was 48 °K while the maximum increase was 166 °K at the door frame. After 30 min, the average temperature rise on the outer surface of the test specimen was 58 °K, while the maximum increase was 280 °K at the door frame. The test showed that the specimen remained largely undamaged. At 25 min and 29 min, a piece of cotton was placed against the outer surface of the panel. The cotton did not catch fire. Maximum distortion of the door away from the fire was only 3 mm. In accordance with the test, the door was classified as "Class B-30 door".

The invention is not restricted to the application examples presented above; instead, many modifications are possible within the scope of the inventive idea as defined by the claims.

## Claims

1. Laminated structure with improved water and fire resistance, **characterized in that** the structure comprises a layer (1) of inorganic silicate-oxysulphatic cement which is composed of water (H₂O), magnesium sulphate (MgSO₄), magnesium oxide (MgO) and sodium silicate (water glass) or silicate-oxychloridic cement which is composed of water (H₂O), magnesium chloride (MgCl₂), magnesium oxide (MgO) and sodium silicate (waterglass).

2. Structure as defined in claim 1, **characterized in that** the cement contains about 10 - 20 w-% of water (H₂O), about 40 - 60 w-% of magnesium oxide (MgO) and ≤ 10 w-% of sodium silicate.

3. Structure as defined in claim 2, **character-. ized** in that the cement contains about 30 - 40 w-% of magnesium sulphate (MgSO₄) or alternatively about 30 - 40 w-% of magnesium chloride (MgCl₂).

4. Structure as defined in any one of claims 1 - 3, **characterized in that** the layer (1) is a coating formed from said silicate-oxychloridic cement and/or slicate-oxysulphatic cement, which is applied directly onto the surface of the base material (2) to be protected.

5. Structure as defined in any one of claims 1 - 4, **characterized in that** the structure is a fibre-reinforced laminate comprising a fibrous reinforcement (3) which is impregnated with a layer (1) of bonding agent consisting of said silicate-oxychloridic cement and/or silicate-oxysulphatic cement.

6. Structure as defined in claim 5, **characterized in that** the fibrous reinforcement (3) consists of one or more non-alkaline glass fibre mats, felts and/or fabrics.

7. Structure as defined in claim 5 or 6, **characterized in that** the structure comprises a top layer (4) consisting of organic resin.

8. Structure as defined in claim 7, **characterized in that** the fibrous reinforcement is at least partially bonded together with the organic resin of the top layer (4) and, on the other hand, preferably to a depth about half its thickness, with the layer (1) of inorganic binding material, so that the organic and inorganic layers are joined together.

9. Structure as defined in claim 7 or 8, **characterized in that** the organic resin of the top layer is a polyester gelcoat modified with aluminium hydroxide (Al(OH)₃).

10. Structure as defined in any one of claims 5 - 9, **characterized in that** the structure comprises a thin metal sheet (5), such as a metal foil, which is bonded by a bonding cement layer (1) onto the surface of the structure to form a coat on it.

11. Structure as defined in any one -of claims 1 - 3 or 5 - 10, **characterized in that** the structure comprises a layer (6) of insulating material consisting of foamed resin and bonded together with the structure by said cement (1).

12. Structure as defined in claim 13, **characterized in that** the layer (6) of insulating material consists of foamed phenolic resin, polyurethane or styrol.

13. Structure as defined in any one of claims 1 - 3 or 5 - 10, **characterized in that** the structure comprises a layer (7) of fibrous insulating material consisting of inorganic fibre and bonded together with the structure by said cement (1).

14. Structure as defined in claim 13, **characterized in that** the layer (7) of insulating material consists of fibre glass, mineral wool, rock wool.

15. Structure as defined in claim 13, **characterized in that** the layer (7) of insulating material consists of so-called laminated wool, in which the fibre directions are essentially the same as the direction of the board.

16. Structure as defined in any one of claims 1 - 3 or 5 - 10, **characterized in that** the structure is a multi-layer structure which has a platelike middle layer (6; 7) of insulating material and two laminates reinforced with a fibrous reinforcement (3) and impregnated with said bonding cement (1), the two laminates being laminated onto opposite sides of the middle layer.

17. Procedure for the manufacture of a laminated structure with improved water and fire resistance, **characterized in that** a layer of inorganic silicate-oxysulphatic cement which is composed of water (H₂O), magnesium sulphate (MgSO₄), magnesium oxide (MgO) and sodium silicate (waterglass) or silicate-oxychloridic cement which is composed of water (H₂O), magnesium chloride (MgCl₂), magnesium oxide (MgO) and sodium silicate (waterglass) is formed in the structure.

18. Procedure as defined in claim 17, **characterized in that** the silicate-oxysulphatic cement is produced by mixing together the following:
- water (H₂O) approx. 10 - 20 w-%
- magnesium sulphate (MgSO₄) approx. 30 - 40 w-%
- magnesium oxide (MgO) approx. 40 - 60 w-%, and
- sodium silicate ≤ 10 w-%.

19. Procedure as defined in claim 17, **characterized in that** the silicate-oxychloridic cement is produced by mixing together the following:
- water (H₂O) approx. 10 - 20 w-%
- magnesium chloride (MgCl₂) approx. 30 - 40 w-%
- magnesium oxide (MgO) approx. 40 - 60 w-%, and
- sodium silicate ≤ 10 w-%.

20. Procedure as defined in any one of claims 17 - 19, **characterized in that** the hardening of the cement is accelerated by subjecting the structure to a heightened temperature of the order of about 40 - 80 C°.

## Patentansprüche

1. Laminatstruktur mit verbesserter Wasser- und Feuerbeständigkeit, **dadurch gekennzeichnet, daß** die Struktur umfaßt: eine Schicht (1) aus einem anorganischen Silikat-Oxysulfat-Zement, der zusammengesetzt ist aus Wasser (H₂O), Magnesiumsulfat (MgSO₄), Magnesiumoxid (MgO) und Natriumsilikat (Wasserglas) oder aus einem Silikat-Oxychlorid-Zement, der zusammengesetzt ist aus Wasser (H₂O), Magnesiumchlorid (MgCl₂), Magnesiumoxid (MgO) und Natriumsilikat (Wasserglas).

2. Struktur, wie sie in Anspruch 1 definiert wurde, **dadurch gekennzeichnet, daß** der Zement etwa 10 bis 20 Gew.-% Wasser (H₂O), etwa 40 bis 60 Gew.-% Magnesiumoxid (MgO) und ≤ 10 Gew.-% Natriumsilikat enthält.

3. Struktur, wie sie in Anspruch 2 definiert wurde, **dadurch gekennzeichnet, daß** der Zement etwa 30 bis 40 Gew.-% Magnesiumsulfat (MgSO₄) oder alternativ etwa 30 bis 40 Gew.-% Magnesiumchlorid (MgCl₂) enthält.

4. Struktur, wie sie in einem der Ansprüche 1 bis 3 definiert wurde, **dadurch gekennzeichnet, daß** die Schicht (1) ein Überzug ist, der aus dem Silikat-Oxychlorid-Zement und/oder dem Silikat-Oxysulfat-Zement gebildet ist, der direkt auf die Oberfläche des zu schützenden Basismaterials (2) aufgebracht wird.

5. Struktur, wie sie in einem der Ansprüche 1 bis 4 definiert wurde, **dadurch gekennzeichnet, daß** die Struktur ein faserverstärktes Laminat ist, das eine Faserverstärkung (3) umfaßt, die mit einer Schicht (1) aus einem Bindemittel imprägniert ist, das aus dem Silikat-Oxychlorid-Zement und/oder dem Silikat-Oxysulfat-Zement besteht.

6. Struktur, wie sie in Anspruch 5 definiert wurde, **dadurch gekennzeichnet, daß** die Faserverstärkung (3) aus einem oder mehreren nicht-alkalischen Glasfaservlies(en), -filz(en) und/oder -gewebe(n) besteht.

7. Struktur, wie sie in Anspruch 5 oder 6 definiert wurde, **dadurch gekennzeichnet, daß** die Struktur eine oberste Schicht (4) umfaßt, die aus einem organischen Harz besteht.

8. Struktur, wie sie in Anspruch 7 definiert wurde, **dadurch gekennzeichnet, daß** die Faserverstärkung wenigstens teilweise mit dem organischen Harz der obersten Schicht (4) und andererseits vorzugsweise bis zu einer Tiefe, die etwa die Hälfte ihrer Dicke ausmacht, mit der Schicht (1) des anorganischen Bindematerials verbunden ist, so daß die organische und die anorganische Schicht miteinander verbunden sind.

9. Struktur, wie sie in Anspruch 7 oder 8 definiert wurde, **dadurch gekennzeichnet, daß** das organische Harz oder obersten Schicht ein Polyester-Gelüberzug ist, der mit Aluminiumhydroxid (Al(OH)₃) modifiziert ist.

10. Struktur, wie sie in einem der Ansprüche 5 bis 9 definiert wurde, **dadurch gekennzeichnet, daß** die Struktur eine dünne Metallschicht (5) wie beispielsweise eine Metallfolie umfaßt, die unter Bildung eines Überzugs darauf mit einer Zementbindemittel-Schicht (1) an die Oberfläche der Struktur gebunden ist.

11. Struktur, wie sie in einem der Ansprüche 1 bis 3 oder 5 bis 10 definiert wurde, **dadurch gekennzeichnet, daß** die Struktur eine Schicht (6) aus isolierendem Material umfaßt, das aus einem geschäumten Harz besteht, und mit dem Zement (1) mit der Struktur verbunden ist.

12. Struktur, wie sie in Anspruch 11 definiert wurde, **dadurch gekennzeichnet, daß** die Schicht (6) aus isolierendem Material aus einem geschäumten Phenolharz, Polyurethan oder Styrol besteht.

13. Struktur, wie sie in einem der Ansprüche 1 bis 3 oder 6 bis 10 definiert wurde, **dadurch gekennzeichnet, daß** die Struktur eine Schicht (7) aus fasrigem Isoliermaterial umfaßt, das aus anorganischen Fasern besteht, und mit dem Zement (1) mit der Struktur verbunden ist.

14. Struktur, wie sie in Anspruch 13 definiert wurde, **dadurch gekennzeichnet, daß** die Schicht (7) aus Isoliermaterial aus Glasfaser, Mineralwolle, Steinwolle besteht.

15. Struktur, wie sie in Anspruch 13 definiert wurde, **dadurch gekennzeichnet, daß** die Schicht (7) aus Isoliermaterial aus sogenannter laminierter Wolle besteht, in der die Faserrichtungen im wesentlichen dieselben sind wie die Richtung der Platte.

16. Struktur, wie sie in einem der Ansprüche 1 bis 3 oder 5 bis 10 definiert wurde, **dadurch gekennzeichnet, daß** die Struktur eine Mehrschichtenstruktur ist, die eine plattenähnliche Mittelschicht (6; 7) aus Isoliermaterial und zwei Laminate umfaßt, die mit einer Faserverstärkung (3) verstärkt sind und mit dem Zementbindemittel (1) imprägniert sind, wobei die zwei Laminate auf gegenüberliegenden Seiten der Mittelschicht auflaminiert sind.

17. Verfahren zur Herstellung einer laminierten Struktur mit verbesserter Wasser- und Feuerbeständigkeit, **dadurch gekennzeichnet, daß** eine Schicht aus anorganischem Silikat-Oxysulfat-Zement, der zusammengesetzt ist aus Wasser (H₂O), Magnesiumsulfat (MgSO₄), Magnesiumoxid (MgO) und Natriumsilikat (Wasserglas) oder aus Silikat-Oxychlorid-Zement, der zusammengesetzt ist aus Wasser (H₂O), Magnesiumchlorid (MgCl₂), Magnesiumoxid (MgO) und Natriumsilikat (Wasserglas) in der Struktur ausgebildet ist.

18. Verfahren, wie es in Anspruch 17 definiert wurde, **dadurch gekennzeichnet, daß** der Silikat-Oxysulfat-Zement hergestellt wird durch Zusammenmischen der folgenden Komponenten:
- Wasser (H₂O): etwa 10 bis 20 Gew.-%;
- Magnesiumsulfat (MgSO₄): etwa 30 bis 40 Gew.-%;
- Magnesiumoxid (MgO): etwa 40 bis 60 Gew.-%; und
- Natriumsilikat: ≤ 10 Gew.-%.

19. Verfahren, wie es in Anspruch 17 definiert wurde, **dadurch gekennzeichnet, daß** der Silikat-Oxychlorid-Zement hergestellt wird durch Zusammenmischen der folgenden Komponenten:
- Wasser (H₂O): etwa 10 bis 20 Gew.-%;
- Magnesiumchlorid (MgCl₂): etwa 30 bis 40 Gew.-%;
- Magnesiumoxid (MgO): etwa 40 bis 60 Gew.-%; und
- Natriumsilikat: ≤ 10 Gew.-%.

20. Verfahren, wie es in einem der Ansprüche 17 bis 19 definiert wurde, **dadurch gekennzeichnet, daß** das Härten des Zements dadurch beschleunigt wird, daß man die Struktur einer erhöhten Temperatur im Bereich von etwa 40 bis 80 °C unterwirft.

## Revendications

1. Structure laminée ayant une résistance au feu et à l'eau améliorée, **caractérisée en ce que** la structure comprend une couche (1) de ciment inorganique au silicate-oxysulfaté, qui est constitué d'eau (H₂O), de sulfate de magnésium (MgSO₄), d'oxyde de magnésium (MgO) et de silicate de sodium (verre soluble) ou de ciment au silicate-oxychloruré, qui est constitué d'eau (H₂O), de chlorure de magnésium (MgCl₂), d'oxyde de magnésium (MgO) et de silicate de sodium (verre soluble).

2. Structure selon la revendication 1, **caractérisée en ce que** le ciment contient environ 10 à 20 % en poids d'eau (H₂O), environ 40 à 60 % en poids d'oxyde de magnésium (MgO) et ≤ 10 % en poids de silicate de sodium.

3. Structure selon la revendication 2, **caractérisée en ce que** le ciment contient environ 30 à 40 % en poids de sulfate de magnésium (MgSO₄) ou bien, selon une autre solution environ 30 à 40 % en poids de chlorure de magnésium (MgCl₂).

4. Structure selon l'une quelconque des revendications 1 à 3, **caractérisée en ce que** la couche (1) est un revêtement formé à partir dudit ciment au silicate-oxychloruré et/ou dudit ciment au silicate-oxysulfaté, qui est appliqué directement sur la surface du matériau de base (2) qui doit être protégé.

5. Structure selon l'une quelconque des revendications 1 à 4, **caractérisée en ce que** la structure est un laminé renforcé par des fibres comprenant un renfort fibreux (3) qui est imprégné d'une couche (1) d'un agent liant consistant en ledit ciment au silicate-oxychloruré, et/ou ledit ciment au silicate-oxysulfaté.

6. Structure selon la revendication 5, **caractérisée en ce que** le renfort fibreux (3) consiste en un ou plusieurs matelas en fibre de verre non alcaline, en feutre et/ou en tissu.

7. Structure selon la revendication 5 ou 6, **caractérisée en ce que** la structure comprend une couche supérieure (4) consistant en résine organique.

8. Structure selon la revendication 7, **caractérisée en ce que** le renfort fibreux est au moins partiellement lié avec la résine organique de la couche supérieure (4) et, par ailleurs, de préférence jusqu'à une profondeur égale à environ la moitié de son épaisseur, avec la couche (1) de matériau liant inorganique, de telle sorte que les couches organique et inorganique sont jointes.

9. Structure selon la revendication 7 ou 8, **caractérisée en ce que** la résine organique de la couche supérieure est un enduit gélifié en polyester modifié avec de l'hydroxyde d'aluminium (Al(OH)₃).

10. Structure selon l'une quelconque des revendications 5 à 9, **caractérisée en ce que** la structure comprend une feuille de métal mince (5), telle qu'un film métallisé, qui est liée à l'aide d'une couche de ciment de liaison (1) sur la surface de la structure pour former un revêtement sur celle-ci.

11. Structure selon l'une quelconque des revendications 1 à 3 ou 5 à 10, **caractérisée en ce que** la structure comprend une couche (6) de matériau isolant consistant en résine alvéolaire et liée à la structure à l'aide dudit ciment (1).

12. Structure selon la revendication 11, **caractérisée en ce que** la couche (6) de matériau isolant consiste en résine phénolique alvéolaire, en polyuréthane ou en styrol.

13. Structure selon l'une quelconque des revendications 1 à 3 ou 6 à 10, **caractérisée en ce que** la structure comprend une couche (7) de matériau fibreux isolant consistant en fibre inorganique et liée à la structure à l'aide dudit ciment (1).

14. Structure selon la revendication 13, **caractérisée en ce que** la couche (7) de matériau isolant consiste en fibre de verre, laine minérale, ou laine de roche.

15. Structure selon la revendication 13, **caractérisée en ce que** la couche (7) de matériau isolant consiste en laine dite laminée, dans laquelle la direction des fibres est sensiblement la même que la direction du panneau.

16. Structure selon l'une quelconque des revendications 1 à 3 ou 5 à 10, **caractérisée en ce que** la structure est une structure à plusieurs couches qui présente une couche centrale lamellaire (6 ; 7) de matériau isolant et deux laminés renforcés par un renfort fibreux (3) et imprégnés dudit ciment de liaison (1), les deux laminés étant laminés sur les côtés opposés de la couche centrale.

17. Procédé de fabrication d'une structure laminée ayant une résistance au feu et à l'eau améliorée, **caractérisée en ce qu'**une couche de ciment au silicate-oxysulfaté inorganique, qui est constitué d'eau (H₂O), de sulfate de magnésium (MgSO₄), d'oxyde de magnésium (MgO) et de silicate de sodium (verre soluble) ou de ciment au silicate-oxychloruré, qui est constitué d'eau (H₂O), de chlorure de magnésium (MgCl₂), d'oxyde de magnésium (MgO) et de silicate de sodium (verre soluble) est formée dans la structure.

18. Procédé de fabrication selon la revendication 17, **caractérisé en ce que** le ciment au silicate-oxysulfaté est produit en mélangeant les éléments suivants :
- eau (H₂O), environ 10 à 20 % en poids
- sulfate de magnésium (MgSO₄), environ 30 à 40 % en poids
- oxyde de magnésium (MgO), environ 40 à 60 % en poids et,
- silicate de sodium, ≤ 10 %.

19. Procédé de fabrication selon la revendication 17, **caractérisé en ce que** le ciment au silicate-oxychloruré est produit en mélangeant les éléments suivants :
- eau (H₂O), environ 10 à 20 % en poids,
- chlorure de magnésium ((MgCl₂), environ 30 à 40 % en poids,
- oxyde de magnésium (MgO), environ 40 à 60 % en poids, et
- silicate de sodium, ≤ 10 % en poids.

20. Procédé selon l'une quelconque des revendications 17 à 19, **caractérisé en ce que** le durcissement du ciment est accéléré en soumettant la structure à une température relevée de l'ordre d'environ 40 à 80 °C.
